Europäisches Patentamt

European Patent Office

Office européen des brevets

(11) Veröffentlichungsnummer: **0 193 839**
A2

## (12) EUROPÄISCHE PATENTANMELDUNG

(21) Anmeldenummer: **86102400.8**

(22) Anmeldetag: **25.02.86**

(51) Int. Cl.⁴: **B 23 K 3/02,** B 23 K 3/04

---

(30) Priorität: **06.03.85 DE 8506482 U**

(43) Veröffentlichungstag der Anmeldung: **10.09.86**
**Patentblatt 86/37**

(84) Benannte Vertragsstaaten: **AT BE CH DE FR GB IT LI LU NL SE**

(71) Anmelder: **Cooper Industries Inc., Two Houston Center Suite 2700, Houston Texas 77010 (US)**

(72) Erfinder: **Munz, Volker, Besigheimer Strasse 165, D-7125 Kirchheim (DE)**
Erfinder: **Ritmann, Günter, Mozartweg 8, D-7121 Gemmrigheim (DE)**

(74) Vertreter: **Feldkamp, Rainer, Dipl.-Ing. et al, Patentanwälte Dipl.-Ing. Curt Wallach Dipl.-Ing. Günther Koch Dipl.-Ing . Rainer Feldkamp Dipl.-Phys.Dr. Tino Haibach Kaufingerstrasse 8 Postfach 920, D-8000 München 2 (DE)**

---

(54) **Stabförmiger Heizkörper.**

(57) Ein stabförmiger Heizkörper weist ein Außenrohr (1) auf, in dem ein Heizelement angeordnet ist und das in eine Bohrung eines zu beheizenden Gegenstandes, insbesondere einer Lötspitze (5) eines Lötkolbens eingesteckt ist. Zwischen dem dem zu beheizenden Gegenstand (5) zugewandten Ende des Außenrohres (1) und dem Heizelement (2) ist ein Wärmemeßfühler (3) angeordnet, dessen Anschlußleitungen (3a, 3b) sich durch das Innere des Heizelementes (2) hindurch erstrecken.

EP 0 193 839 A2

## Stabförmiger Heizkörper

Die Erfindung bezieht sich auf einen stabförmigen Heizkörper mit einem Außenrohr, in dem ein Heizelement angeordnet ist und das in eine Bohrung in einem zu beheizenden Gegenstand, insbesondere die Lötspitze eines Lötkolbens, eingesteckt ist.

Derartige stabförmige Heizkörper werden auf vielen Gebieten der Technik verwendet, wobei als Beispiele nur Kunststoff-Spritzdüsen und insbesondere Lötkolben genannt werden sollen. Hierbei sind häufig stabförmige Heizkörper mit sehr geringen Abmessungen erwünscht, die noch einfach herstellbar sein sollen.

Der Erfindung liegt die Aufgabe zugrunde, einen stabförmigen Heizkörper der eingangs genannten Art zu schaffen, der bei einfachem Aufbau und geringen Abmessungen eine genaue Temperaturregelung des zu beheizenden Gegenstandes ermöglicht.

Diese Aufgabe wird durch die im kennzeichnenden Teil des Anspruchs 1 angegebenen Merkmale gelöst.

Vorteilhafte Ausgestaltungen und Weiterbildungen der Erfindung ergeben sich aus den Unteransprüchen.

Durch die erfindungsgemäß Anordnung des Wärmemeßfühlers zwischen dem dem zu beheizenden Gegenstand zugewandten Ende des Außenrohres und dem Heizelement ergibt sich einerseits ein einfacher mechanischer Aufbau, da das Heizelement und der Wärmemeßfühler in Axialrichtung hintereinander angeordnet sind und in einfacher Weise in das Außen-

0193839

- 2 -

rohr eingeschoben werden können. Weiterhin ergibt sich eine sehr gute Regelbarkeit, da durch den Abstand des Wärmemeßfühlers von dem Heizelement und die Wahl des zwischen dem Wärmemeßfühler und dem Heizelement angeordneten Vergußmaterials oder eines Trägermaterials die Regelcharakteristik von Heizelement, Wärmemeßfühler und dem zu beheizenden Gegenstand beeinflußt wird. Eine Anordnung des Wärmemeßfühlers unmittelbar am Heizelement ergibt eine Regelung mit großem Integralanteil und einem vernachlässigbaren Überschwingen, da der Wärmemeßfühler stärker von der Temperatur des Heizelementes beeinflußt wird. Bei Vergrößerung des Abstandes zwischen dem Wärmemeßfühler und dem Heizelement reagiert der Wärmemeßfühler besser auf Änderungen der Temperatur des zu beheizenden Gegenstandes, neigt jedoch stärker zum Überschwingen .

Durch die konische Form des freien Endes des Außenrohres sowie der Innenbohrung des zu beheizenden Gegenstandes, beispielsweise einer Lötspitze und der Anordnung des Wärmemeßfühlers in diesem konischen Abschnitt des Außenrohres ergibt sich ein verbesserter Wärmeübergang zwischen dem zu beheizenden Gegenstand und dem Wärmemeßfühler.

Um ein Festbrennen des Außenrohres in der Bohrung des zu beheizenden Gegenstandes zu verhindern, ist die Oberfläche der Innenbohrung des zu beheizenden Gegenstandes vorzugsweise galvanisiert, wobei diese Galvanisierung dadurch ermöglicht werden kann, daß eine Querbohrung am Ende der inneren Bohrung des zu beheizenden Gegenstandes angeordnet wird.

Wenn der Heizkörper zur Beheizung eines Lötspitze verwendet wird, kann der Wärmeübergang zwischen der Lötspitze und dem Heizkörper sowie dem Wärmemeßfühler dadurch verbessert werden, daß die Lötspitze mit Hilfe einer Überwurfhülse auf das Außenrohr des Heizkörpers aufgepreßt wird, wobei sich eine gute Flächenanpressung des konischen Endes des Außenrohres und der Innenbohrung der Lötspitze ergibt.

Um im Gegensatz zu bekannten Überwurfhülsen auch die Verwendung von gebogenen Lötspitzen zu ermöglichen, ist die Überwurfhülse vorzugsweise mit einer langgestreckten Aussparung im Außenumfang versehen, durch die hindurch die Lötspitze eingesetzt und in das Innere der Überwurfhülse eingeschwenkt werden kann.

Der Heizkörper kann an dem Griff eines Lötkolbens entweder starr befestigt werden, wobei die Kraft, mit der die Überwurfhülse angezogen wird, die Andruckkraft zwischen der Lötspitze und dem Heizkörper bestimmt, oder der Heizkörper kann mit Hilfe einer Feder gegen die Lötspitze und die Spitzenhülse vorgespannt sein, wobei diese Feder eine definierte Andruckkraft zwischen der Lötspitze und dem Heizkörper ergibt.

Ausführungsbeispiele der Erfindung werden im folgenden anhand der Zeichnungen noch näher erläutert.

In der Zeichnung zeigen:

Figur 1          eine teilweise geschnittene Ansicht des vorderen Endes eines Heizkörpers,

Figur 2          eine der Fig. 1 entsprechende Ansicht einer weiteren Ausführungsform des Heizkörpers,

Figur 3          eine der Fig. 1 entsprechende Ansicht
                 einer dritten Ausführungsform des Heizkörpers,

Figur 4          eine Längsschnittansicht des vorderen
                 Teils eines Lötkolbens, bei dem eine
                 Ausführungsform des Heizkörpers verwendet wird,

Figur 5          eine weitere Ausführungsform eines Löt-
                 kolbens unter Verwendung einer Ausfüh-
                 rungsform des Heizkörpers,

Figur 6          eine Ansicht einer Ausführungsform einer Überwurfhülse zum Anpressen einer
                 gebogenen Lötspitze auf einen stabförmigen Heizkörper nach den Fig. 1 bis 3,

Figur 7          eine um 90° um die Längsachse gedrehte
                 Ansicht der Überwurfhülse nach Fig. 6.

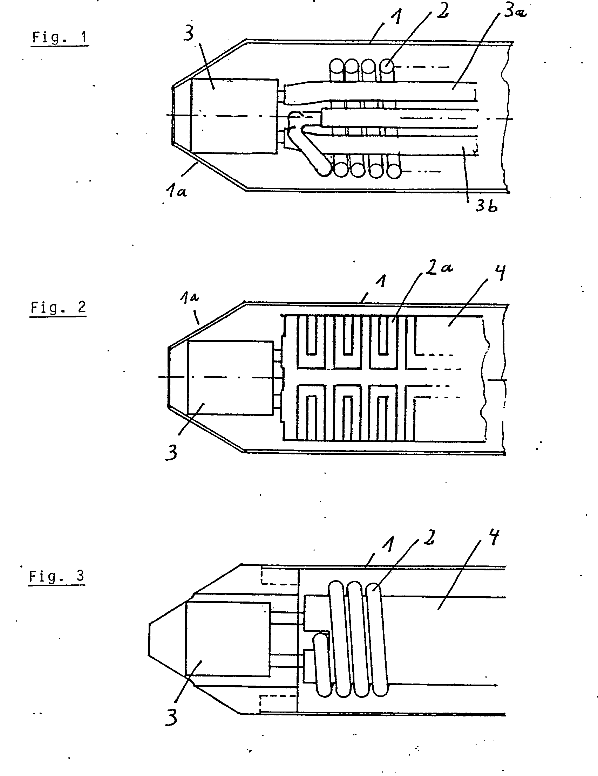

In Fig. 1 ist eine erste Ausführungsform des vorderen Endes
eines stabförmigen Heizkörpers gezeigt, der in eine Bohrung
eines zu beheizenden Gegenstandes einsetzbar ist. Dieser
Heizkörper weist ein Außenrohr 1 auf, dessen Ende eine abgeflacht konische Spitze 1a aufweist, in deren Bereich sich
ein Wärmemeßfühler 3 befindet. Das Heizelement ist in Form
einer freitragenden Wicklung 2 ausgebildet, durch deren Inneres hindurch sich die Anschlußleitungen 3a,3b des Wärmemeßfühlers 3 hindurch erstrecken, so daß sich ein sehr kompakter Aufbau ergibt.

Die aus Wärmemeßfühler 3 und Heizelement 2 bestehende Einheit kann vorgefertigt und dann in das Außenrohr 1 eingesetzt werden, worauf die verbleibenden Hohlräume mit einer Keramikvergußmasse ausgegossen werden können. Der Abstand zwischen dem Wärmemeßfühler 3 und der letzten Windung des Heizelementes 2 beeinflußt sehr stark das Regelverhalten der aus dem Heizkörper und dem zu beheizenden Gegenstand bestehenden Einheit. Durch entsprechende Wahl dieses Abstandes sowie der verwendeten Vergußmasse läßt sich die Regelcharakteristik in weiten Grenzen wunschgemäß verändern.

Die aus dem Wärmemeßfühler und dem Heizelement 2 bestehende Einheit kann vorzugsweise vor dem Einsetzen in das Außenrohr 1 in eine Keramikmasse eingetaucht werden, so daß sich eine bereits eingebettete Einheit ergibt, die dann in das Außenrohr eingesetzt und mit weiterem Keramikmaterial vergossen wird.

Bei der Ausführungsform nach Fig. 2 ist das Heizelement durch eine auf einen Keramikkörper 4 aufgedruckte Heizwicklung 2a gebildet, wobei der Keramikkörper ebenfalls Bohrungen für den Durchgang der Anschlußleitungen des Wärmemeßfühlers 3 aufweist. Der Keramikkörper kann hierbei entweder eine zylindrische oder plattenförmige Form aufweisen, wobei im letzteren Fall zusätzlich die Möglichkeit besteht, den Wärmemeßfühler auf das vordere Ende des Keramikkörpers 4 aufzudrucken.

In Fig. 3 ist eine dritte Ausführungsform des Heizkörpers gezeigt, bei dem ein zylindrischer Keramikkörper zur Aufnahme der Heizwicklung 2 dient. Auch in diesem Fall erstrecken sich die Anschlußleitungen des Wärmemeßfühlers durch den zylindrischen Keramikkörper hindurch.

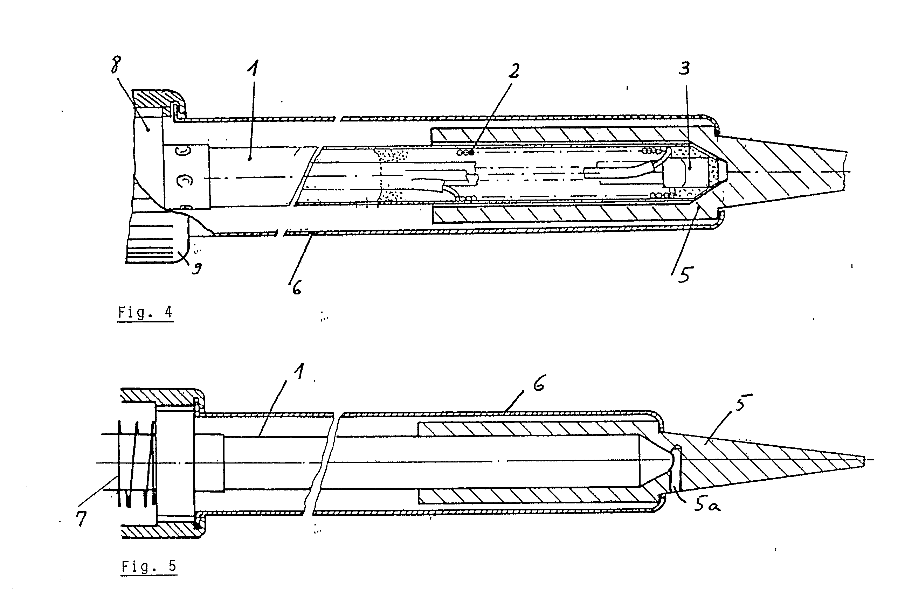

In den Fig. 4 und 5 ist die Anwendung eines derartigen stabförmigen Heizkörpers für elektrische Lötkolben mit Temperaturregelung gezeigt. Wie aus Fig. 4 zu erkennen ist, erstreckt sich das Außenrohr 1 des Heizkörpers in die Bohrung einer Lötspitze 5, wobei das vordere Ende dieser Bohrung einen Konus aufweist, der an den Konus des freien Endes des Außenrohres 1 angepaßt ist. Der Heizkörper mit dem Außenrohr 1, der Heizwicklung 2 und dem Wärmemeßfühler 3 kann in Form einer der Ausführungsformen nach den Fig. 1 bis 3 ausgebildet sein. Die Lötspitze 5 wird mit Hilfe einer Überwurfhülse 6 gegen den Konus des Außenrohres 1 angepreßt, wobei in Fig. 4 das Außenrohr starr an einem mit Außengewinde versehenen Teil 8 befestigt ist, das seinerseits an dem Griff des Lötkolbens befestigt ist. Die Überwurfhülse 6 weist eine Überwurfmutter 9 auf, die mit Innengewinde versehen ist und auf das Außengewinde des Teils 8 aufgeschraubt ist. Die Kraft, mit der diese Überwurfmutter auf das Teil 8 aufgeschraubt ist, bestimmt hierbei den Anpreßdruck der Lötspitze auf den stabförmigen Heizkörper.

Bei der Ausführungsform nach Fig. 5 ist der Heizkörper mit Hilfe einer Feder 7 gegen die Lötspitze 5 und die Überwurfhülse 6 vorgespannt, so daß sich eine konstante Anpreßkraft zwischen Heizkörper und Lötspitze ergibt. Aus Fig. 5 ist weiterhin eine Querbohrung 5a der Lötspitze 5 zu erkennen, die ein Galvanisieren der Innenoberfläche der Bohrung der Lötspitze 5 ermöglicht.

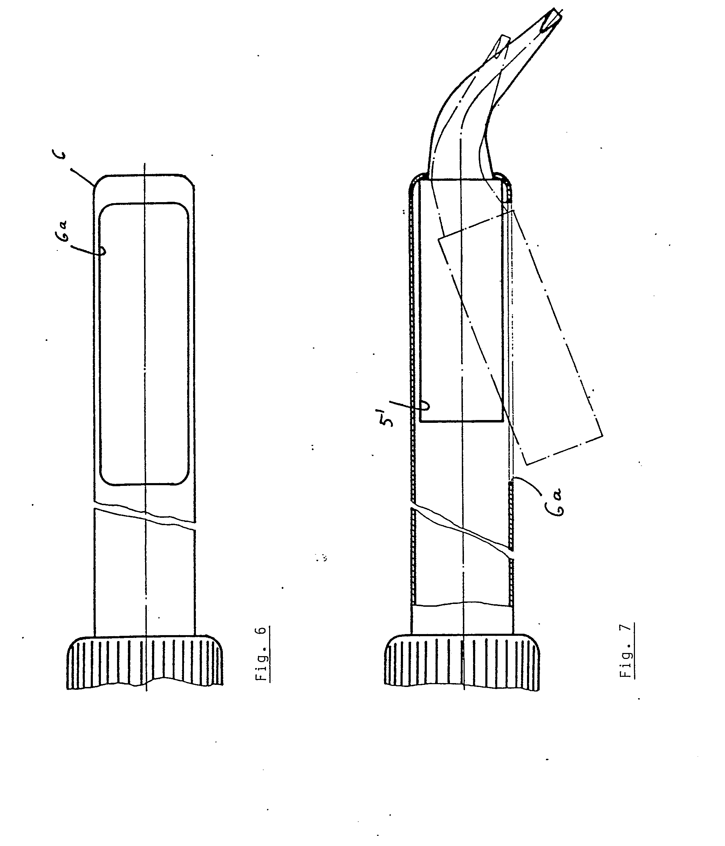

Bekannte Überwurfhülsen ermöglichen lediglich die Verwendung von geraden Lötspitzen, da andere Lötspitzen nicht in die Überwurfhülse eingeschoben werden können. In den Fig. 6 und 7 ist eine Ausführungsform einer Überwurfhülse gezeigt, die auch die Verwendung von gebogenen Lötspitzen ermöglicht.

Bei dieser Ausführungsform der Überwurfhülse ist eine
langgestreckte Aussparung 6a am Außenumfang der Überwurfhülse vorgesehen, durch die hindurch das zum Löten dienende freie Ende der Lötspitze und der Körper der Lötspitze einschiebbar ist, wie dies in Fig. 7 angedeutet
ist, worauf die Lötspitze 5' in die endgültige Position
im Inneren der Überwurfhülse verschwenkt werden kann. Die
Lötspitze und die Überwurfhülsen können dann auf den Heizkörper aufgeschoben werden.

Wie aus den Fig. 4, 5 und 7 zu erkennen ist, weist die
Lötspitze 5 bzw. 5' in jedem Falle eine Schulter auf, die
mit einer Einschnürung am vorderen Ende der Überwurfhülse
in Eingriff kommt.

COOPER INDUSTRIES, INC .

Patentansprüche

1. Stabförmiger Heizkörper mit einem Außenrohr, in dem ein Heizelement angeordnet ist und das in eine Bohrung eines zu beheizenden Gegenstandes, insbesondere eine Lötspitze eines Lötkolbens eingesteckt ist, dadurch gekennzeichnet, daß zwischen dem dem zu beheizenden Gegenstand (5) zugewandten Ende des Außenrohrs (1) und dem Heizelement (2) ein Wärmemeßfühler (3) angeordnet ist, dessen Anschlußleitungen (3a,3b) sich durch das Innere des Heizelementes (2) hindurch erstrecken.

2. Heizkörper nach Anspruch 1, dadurch gekennzeichnet, daß das Heizelement durch eine freitragende langgestreckte Wicklung (2) aus Widerstandsdraht gebildet ist und daß sich die Anschlußleitungen (3a,3b) des Wärmemeßfühlers (3) durch das Innere der Wicklung (2) hindurch erstrecken.

3. Heizkörper nach Anspruch 1, dadurch gekennzeichnet, daß das Heizelement durch eine auf einen Keramikkörper (4) aufgewickelte Wicklung (2) gebildet ist, und daß der Keramikkörper (4) Bohrungen für den Durchgang der Anschlußleitungen des Wärmemeßfühlers (3) aufweist.

0193839

- 2 -

4. Heizkörper nach Anspruch 1, dadurch g e k e n n - z e i c h n e t, daß das Heizelement durch eine auf einen Keramikkörper (4) aufgedruckte Heizwicklung (2a) gebildet ist.

5. Heizkörper nach Anspruch 3 oder 4, dadurch g e - k e n n z e i c h n e t, daß der Keramikkörper (4) rohrförmig ist.

6. Heizkörper nach einem der vorhergehenden Ansprüche, dadurch g e k e n n z e i c h n e t, daß das Heizelement und der Wärmemeßfühler (3) in dem Außenrohr (1) in Keramikvergußmasse eingebettet sind.

7. Heizkörper nach einem der vorhergehenden Ansprüche, dadurch g e k e n n z e i c h n e t, daß die Regelcharakteristik der Kombination aus Wärmemeßfühler (3) und Heizelement (2) durch den Abstand zwischen dem Wärmemeßfühler (3) und dem Heizelement bestimmt ist.

8. Heizkörper nach einem der vorhergehenden Ansprüche, dadurch g e k e n n z e i c h n e t, daß das Außenrohr eine abgeflacht konische Spitze (1a) aufweist und daß der Wärmemeßfühler (3) in dieser abgeflacht konischen Spitze angeordnet ist.

9. Heizkörper nach einem der vorhergehenden Ansprüche, dadurch g e k e n n z e i c h n e t, daß das Außenrohr (1) in eine Bohrung einer Lötspitze (5) einsteckbar ist, und daß der Durchmesser der Bohrung dem Außendurchmesser des Außenrohres (1) entspricht.

10. Heizkörper nach Anspruch 9, dadurch g e k e n n - z e i c h n e t, daß das Ende der Bohrung der Lötspitze (5) konisch ist und daß der Konus den glei- chen Winkel aufweist wie der Konus des Außenrohres (1).

11. Heizkörper nach Anspruch 9 oder 10, dadurch g e - k e n n z e i c h n e t, daß die Lötspitze eine Schulter aufweist und daß eine Spitzenhülle (6) zur Befestigung der Lötspitze (5) auf dem Heizkörper am vorderen Ende eine Einbördelung aufweist, die auf der Schulter der Lötspitze (5) anliegt.

12. Heizkörper nach einem der Ansprüche 9 bis 11, dadurch g e k e n n z e i c h n e t, daß eine Feder (7) zur Vorspannung des Heizkörpers gegen die Lötspitze (5) und die Spitzenhülse (6) vorgesehen ist.

13. Heizkörper nach einem der Ansprüche 9 bis 12, dadurch g e k e n n z e i c h n e t, daß die Spitzenhülse (6) zur Aufnahme gebogener Lötspitzen (5') eine sich in Längsrichtung erstreckende Aussparung (6a) im Außenumfang aufweist.

14. Heizkörper nach einem der Ansprüche 9 bis 13, dadurch g e k e n n z e i c h n e t, daß die Lötspitze (5,5') auf den Flächen der Bohrung galvanisiert ist.

Fig. 1

Fig. 2

Fig. 3

Fig. 4

Fig. 5

Fig. 6

Fig. 7